# EUROPEAN PATENT APPLICATION

(11) **EP 1 243 726 A1**
(43) Date of publication of application: **25.09.2002**
(21) Application number: 02251383.2
(22) Date of filing: 27.02.2002
(51) Int. Cl.: E05B 65/32, E05C 3/06, E05C 3/26

(54) **Assembly in particular for a vehicle door latch**

(30) Priority: 21.03.2001 GB 1070655
(71) Applicant: ArvinMeritor Light Vehicle Systems (UK) Ltd, Birmingham, West Midlands, B30 3BW (GB)
(72) Inventor: Fisher, Sidney Edward, Solihull, West Midlands B90 2HB (GB)
(74) Representative: Jones, John Bryn

(57) **Abstract**

An assembly (10,110) in particular for a vehicle door latch including a first component (12,112) and a second component (14,114), the first component having a first deformed portion (16,116), in which the first deformed portion engages with the second component to allow rotation there between and the first deformed portion secures the first component to the second component.

## Description

The present invention relates to assemblies and in particular assemblies of components used in land vehicles such as cars.

Assemblies in which components are secured together by fixing mechanisms such as nuts and bolts or rivets are known.

To reduce the weight of assemblies it is desirable to reduce the number of overall components, and hence secure components without the use of such fixing mechanisms. By deforming the components into an interlocking relationship and therefore securing themselves relative to each other, the need for such fixing mechanisms is eliminated, thereby limiting the number of overall components in the assembly.

Such deformation techniques are known, with the TOG-L-LOC™ (a trademark of BTM Corp. of Marysville, MI, USA) system being one example (see US Patent 5984563 dated 16 November 1999 and US Patent 5267383 dated 7 December 1993). These techniques can be used to secure various components (see US Patent 4827671 dated 9 May 1989 and US Patent 4800638 dated 31 January 1989). The hemming of sheet metal components is another example which can used to secure assemblies.

However such assemblies secured by deformation techniques and fixing mechanisms do not allow free rotation of components relative to each other, and thus cannot be used for assemblies which do require rotation relative to each other.

It is possible to use a single nut and bolt to secure an assembly which requires components to rotate relative to each other but this results in an additional component being required.

Therefore an object of the present invention is to provide an improved assembly in which the number of overall components is reduced, with the components being secured but also being capable of rotating relative to each other.

Thus according to the present invention there is provided an assembly including a first component and a second component, the first component having a first deformed portion, in which the deformed portion engages with the second component to allow rotation there between and the first deformed portion secures the first component to the second component.

The invention will now be described, by way of example only, with reference to the accompanying drawings in which:-
Figure 1 is a cross sectional view of an assembly according to the present invention,
Figure 2 is a cross sectional view of an alternative assembly according to the present invention, and
Figure 3 is a front view of a vehicle door including an assembly according to the present invention.

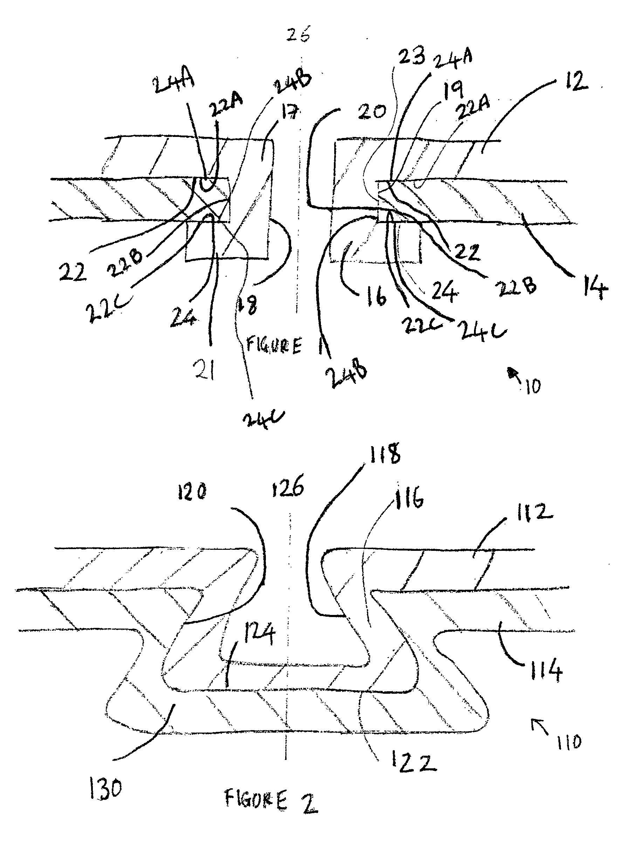

With reference to Figure 1 there is shown an assembly 10 including a first component 12 and a second component 14.

The first component 12 and the second component 14 can be produced from a sheet steel and are typically pressed.

The first component 12 includes a first deformed portion 16.

The first deformed portion 16 includes a cylindrical portion 17 and an annular flange 21 contiguous with the end of the cylindrical portion.

The cylindrical portion 17 defines a through hole 18 and a radially outwardly orientated wall 19, the through hole 18 and wall 19 being circular.

The cylindrical portion 17 in conjunction with the annular flange 21 acts to limit axial and radial movement between the first and second component.

The second component 14 has a second through hole 20, which is a circular hole. The second hole has a radially inwardly orientated wall 23.

The deformed portion 16 engages with the second component 14 to secure the second component to the first component.

The engagement between the deformed portion 16 and the second component 14 permits the second component 14 to rotate relative to the first component 12 about an axis 26.

Thus, engagement between the deformed portion 16 of the first component 12 and the second component 14 defines a first bearing surface 22 (comprising surfaces 22A, 22B, and 22C) of the first component 12 and a second bearing surface 24 (comprising surfaces 24A, 24B and 24C) of the second component 14.

The outwardly orientated wall 19 forms surface 22B.

The inwardly orientated wall 23 forms surface 24B.

In this embodiment it can be seen that a suitable pressing process is required to deform the first component 12 such that it is secured to the second component 14. This pressing process can include several stages with a first stage to produce a cylindrical portion. Part of this cylindrical portion then protrudes through the hole 20 of the second component 14. A final pressing stage is then employed to deform the end of this cylindrical portion to produce the annular flange 21.

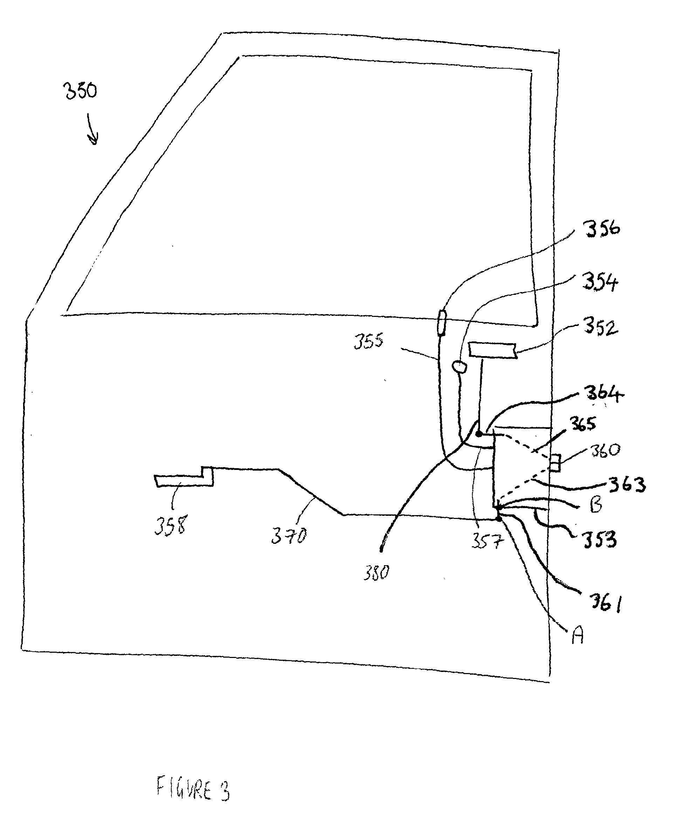

With reference to Figure 2 there is shown an alternative assembly 110.

This assembly includes the same functional features of Figure 1, but numbered 100 greater. However in this embodiment engagement between the first and second components is different.

The first component 112 includes a first deformed portion 116 which defines a blind hole 118. Hole 118 is a circular hole.

The first deformed portion 116 is substantially in the shape of the Greek symbol Omega (Ω).

The second component 114 includes a second deformed portion 130, the second deformed portion being substantially in the shape of the Greek symbol Omega (Ω).

The second deformed portion 130 defines a second blind hole 120.

The second deformed portion 130 engages with the deformed portion 116 of the first component 14 to secure the second component to the first component.

Engagement between the deformed portions permits the second component 114 to rotate relative to the first component 112 about an axis 126.

Engagement between the deformed portion 116 of the first component 112 and the deformed portion 130 of the second component 114 defines a first bearing surface 122 of the first component 12 and a second bearing surface 124 of the second component 114.

In this embodiment it can be seen that a suitable pressing process is required to deform the first component 112 such that it is secured to the second component 114. This pressing process can include several stages with a first stage to produce part of the deformed portions 116,130 of the first and second components, the deformed portions defining the blind holes 118,120. The blind holes are then subjected to a stage which includes lateral extrusion, to further deform the blind holes such that the blind holes interlock and hence secure the first component 112 to the second component 114.

Note that in this embodiment the pressing stage to produce the deformed portions does not result in the piercing of the components, and consequently any coating applied to the components, in particular the bearing surfaces, will not have its integrity compromised, and hence coating life will be prolonged.

Note that in a further embodiment the second hole may be a blind hole, with a deformed portion of the first component being a through hole and engaging with the blind hole to secure the first component to the second component.

In the embodiments of Figure 1 and Figure 2 the pressing process, and hence the form of the deformed portions 16, 116,130 is designed such that the first and second components are free to rotate relative to each other, but not so loose as to result in excessive rattle between the components.

A coating may be applied to the first bearing surface 22,122, the coating being selected to provide high wear resistance when compared to the material of the first component. For example a metallic coating such as copper, or a plastic coating such as Polytetraflouroethene (PTFE).

The coating can be any material which provides high wear resistance and/or lower friction compared to the material of the first component when combined with the material of the second component.

Alternatively, or additionally, a similar coating may be applied to the second bearing surface 24,124.

The first and/or second component may also be subjected to a surface treatment process such as carburizing or induction hardening to provide a similar high wear resistant surface.

The coatings on the first and/or second components can have specified thicknesses which may be controlled to tailor the fit between the two components such that it is rattle free and allows rotation between the two components.

Note that in the embodiment of Figure 1 a coating applied to both surfaces of the second component 14 prior to pressing of hole 20 will be broken when hole 20 is pierced during the pressing process, and hence there will be no coating on the inwardly facing wall 23 (i.e. bearing surface 24B). However a coating applied to the first bearing surface 22 (i.e. surfaces 22A, 22B, and 22C) prior to deforming will not be broken since the coating will not be pierced. Hence a coating will be present at surface 22B for engagement with uncoated bearing surface 24B.

Preferably the coating selected for the first bearing surface 22 is sufficiently ductile to maintain integrity during the pressing process.

Alternatively the bearing surface 24B can be coated after the through hole 20 has been pierced and hence a coating will be present at surface 24B for engagement with either a coated or uncoated bearing surface 24B.

In the embodiment of Figure 2 the first and second components are not pierced during the pressing process and hence any coating applied to the first and/or second bearing surface remains unbroken providing the coating is sufficiently ductile to maintains its integrity during the pressing process.

Note that in further embodiments the inwardly facing wall 19 and the outwardly facing wall 23 need not both be circular, with one of the inwardly facing wall or the outwardly facing wall being non circular.

Similarly, in the embodiment of Figure 2 the first hole 118 and the second hole 120 need not both be circular holes, with one of the first and second holes being a non circular hole.

With reference to Figure 3 there is shown a vehicle door 350.

The vehicle door 350 includes a vehicle door latch 353, a sill button 356, a key barrel 354, an inside door handle 358, and an outside door handle 352.

The vehicle door latch 353 includes a latch bolt 360 which operates to releasably retain the vehicle door 350 in a closed position. The latch bolt 360 is mounted on the vehicle door latch 353.

The key barrel 354 is connected to the vehicle door latch 353 by a transmission path 357. The key barrel 354 operates to lock and unlock the vehicle door.

The sill button 356 is connected to the vehicle door latch 353 by a transmission path 355. The sill button 356 operates to lock and unlock the vehicle door.

The inside door handle 358 is connected to an input element of the latch in the form of a first lever 361, by a transmission path 370. The first lever 361 is connected to the latch bolt 360 by a first latch transmission path 363 (shown schematically).

It can be seen that the transmission path 370, the first lever 361 and the first latch transmission path 363 together form a transmission path between the inside door handle 358 and the latch bolt 360.

The outside door handle 352 is connected to an input element of the latch, in the form of a second lever 364, by a transmission path 380. The second lever 364 is connected to the latch bolt 360 by a second latch transmission path 365 (shown schematically).

It can be seen that the transmission path 380, the second lever 364 and the second latch transmission path 365 together form a transmission path between the outside door handle 352 and the latch bolt 360.

It should be noted that the key barrel 354, the sill button 356, the inside handle 358 or the outside handle 352 are all manually actuable elements.

Transmission paths 355, 357, 363, 365, 370 and 380 and input elements 364 and 361 can take many forms, typically rods and levers. A particular installation may require two adjacent parts of a transmission path to be pivoted together and an assembly according to the present invention can be used to provide such pivoting movement, for example an end of the transmission path 370 can form a first component according to the present invention which can be connected to an end of the input element 361 (which forms the second component) to provide for a pivotal connection at position A.

Alternatively a component of a transmission path can be pivotally mounted relative to a stationary component such as a latch chassis or a part of the vehicle door via an assembly according to the present invention, for example input element 361 can form a first component according to the present invention which can be connected to the latch chassis (which forms the second component) to provide for a pivotal connection at position B.

In other embodiments any component of the transmission paths 370, 355, 357 or 380 can be connected to the door which can form the first or second component.

Two types of locking are known, free wheel type locking and block type locking.

In a free wheel type locking system a break in the transmission path between the outside door handle and the latch bolt prevents the latch bolt from being released when the latch is locked. With the latch unlocked the transmission path is complete and operation of the outside door handle will release the latch bolt. In a free wheel type locking system the outside door handle is always free to move, but will only release the latch bolt when the latch is unlocked.

In a block locking type system the transmission path between the outside door handle and the latch bolt is blocked such that with the latch in a locked condition the latch bolt is not released. With the latch unlocked the transmission path is unblocked and operation of the outside door handle will release the latch bolt. In a block type locking system the outside door handle is only free to move when the latch is unlocked.

When the vehicle door 350 is fitted with a free wheel type locking system, then an assembly according to the present invention can be fitted into the transmission path (either in the latch or between the latch and handle) such that the first and second component are selectively couplable and decouplable to provide the break in the transmission path.

Thus with the vehicle door latch 353 in a locked condition (as a result of either sill button, key barrel or some other remote electronic operation), the first and second components are uncoupled and operation of the outside door handle 352 causes the first and second components to rotate relative to each other, thus breaking the transmission path between the outside door handle 352 and the latch bolt 360, such that the latch bolt 360 does not move and the vehicle door remains closed. Thus the outside door handle 352 being connected to one of the first and second components will be moved, but will not release the latch bolt 360.

Furthermore with the vehicle door latch 353 in an unlocked condition (as a result of either sill button, key barrel or some other remote electronic operation), the first and second components are coupled and operation of the outside door handle 352 causes the first and second components to move such that the transmission path between the outside door handle 352 and the latch bolt 360 is complete and the latch bolt 360 moves and releases the vehicle door. Thus the outside door handle 352 being connected to the first and second components will be moved, and release the latch bolt 360.

When the vehicle door 350 is fitted with a block type locking system, then an assembly according to the present invention can be fitted into the transmission path (either in the latch or between the latch and handle) such that the transmission path is either selectively blocked or unblocked by one of the first and second components.

Thus with the vehicle door latch 353 in a locked condition, the transmission path between the outside door handle 352 and the latch bolt 360 is blocked by either the first or second component, such that the outside door handle 352 will not move, and will not result in movement of the latch bolt 360.

With the vehicle door latch 353 in an unlocked condition the transmission path between the outside door handle 352 and the latch bolt 360 is not blocked, ie all parts of the transmission paths are free to move, and operation of the outside door handle 352 will move and release the latch bolt 360.

Similarly, the inside door handle 358 can also operate on a free wheel or block locking principle, with the transmission path between the inside door handle 358 and the latch bolt 360 arranged to include an assembly according to the present invention. The transmission path is either blocked/unblocked or broken/unbroken.

The blocking/breaking of the transmission path associated with an inside handle can be used to provide for deadlocking (superlocking) ie operation of the inside and outside door handles do not cause the door to open.

Alternatively or additionally the block/breaking of the transmission path associated with an inside handle can be used to provide for a child safety function ie operation of the inside handle does not open the door, and operation of the outside handle will open an unlocked door but will not open a locked door.

## Claims

1. An assembly (10, 110) including a first component (12, 112) and a second component (14, 114), the first component having a first deformed portion (16, 116), in which the first deformed portion engages with the second component to allow rotation there between and the first deformed portion secures the first component to the second component.

2. An assembly according to claim 1 in which the second component includes a second deformed portion (130), the second deformed portion engaging with the first deformed portion to allow rotation there between with the first and second deformed portions cooperating to secure the first component to the second component.

3. A vehicle door latch (303) including an assembly according to claim 1 or 2.

4. A vehicle door latch as defined in Claim 3 having a latch bolt (360) for releasably retaining a door (350) in use, and an input element (361), in which a transmission path (370) exists between the input element and the latch bolt, the input element being operable to unlatch the latch, the transmission path including the first and second components, wherein with the latch in an unlocked condition operation of the input element causes the first and second components to move and release the latch bolt, and with the latch in a locked condition operation of the input element causes one of the first and second components to rotate relative to the other of the first and second components.

5. A vehicle door latch as defined in Claim 3 having a latch bolt for releasably retaining a door in use, and an input element, in which a transmission path exists between the input element and the latch bolt, the input element being operable to unlatch the latch, the transmission path being selectively blockable by one of the first and second components.

6. A vehicle door including a latch having a latch bolt for releasably retaining the door in use, and a manually actuable element (352, 354, 356, 358), in which a transmission path exists between the manually actuable element and the latch bolt, the manually actuable element being operable to unlatch the latch, the transmission path including one of the first and second components of an assembly according to Claims 1 or 2.

7. A vehicle door including a latch connected via a transmission path to a manually actuable element, the manually actuable element being operable to lock and unlock the latch, the transmission path including one of the first and second components of an assembly according to Claims 1 or 2.

8. A vehicle door according to Claim 6 or 7 or a vehicle door latch according to Claim 4 or Claim 5 in which the transmission path includes the other of the first and second components.

9. A vehicle door according to Claim 8 when dependent on Claim 6 wherein with the latch in an unlocked condition operation of the manually actuable element causes the first and second components to move, and with the latch in a locked condition operation of the manually actuable element causes one of the first and second components to rotate relative to the other of the first and second components.

10. A vehicle door according to Claim 8 when dependent on Claim 6 in which the transmission path is selectively blockable by one of the first and second components.
